# EUROPÄISCHE PATENTSCHRIFT

(11) **EP 0 621 104 B1**
(45) Veröffentlichungstag und Bekanntmachung des Hinweises auf die Patenterteilung: **04.10.1995**
(21) Anmeldenummer: 93106614.6
(22) Anmeldetag: 23.04.1993
(51) Int. Cl.: B23P 15/26, B21C 37/22, F28F 3/02, F28F 1/12

(54) **Verfahren und Vorrichtung zur Herstellung von Wärmetauscherelementen sowie zugehöriges Rippenrohr**
Method and device for manufacturing heat-exchanger elements and corresponding ripped tube
Procédé et dispositif des éléments d'échangeurs de chaleur et tube à ailettes correspondant

(43) Veröffentlichungstag der Anmeldung: 26.10.1994
(73) Patentinhaber: BDAG Balcke-Dürr Aktiengesellschaft, D-40882 Ratingen (DE)
(72) Erfinder: Podhorsky, Miroslav, Dr., W-4030 Ratingen 1 (DE); Sassmann, Harald, W-4030 Ratingen 1 (DE)
(74) Vertreter: Stenger, Watzke & Ring Patentanwälte

(56) Entgegenhaltungen:
- DE-A- 1 602 286
- DE-A- 4 039 292
- FR-A- 1 259 266
- GB-A- 1 080 874

## Beschreibung

Die Erfindung betrifft ein Verfahren und eine Vorrichtung zur Herstellung von Wärmetauscherelementen mit einem rohrformigen Grundkörper, dessen Querschnitt eine große Breite im Verhältnis zu seiner Höhe aufweist und der auf seiner Oberfläche mit die Wärmeaustauschfläche vergrößernden Rippen versehen ist, sowie ein entsprechendes Rippenrohr.

Derartige Rippenrohre sowie ein Verfahren und eine Vorrichtung zu ihrer Herstellung sind in der europäischen Patentanmeldung EP-A-0 546 334 (Stand der Technik gemäß Artikel 54(3) EPC) offenbart. Hiernach wird auf den gegenüberliegenden Breitseiten des Grundkörperprofils jeweils ein Rippenblech in Profillängsrichtung aufgebracht, das jeweils von einer Rolle abgezogen und vor dem Aufbringen durch eine Profiliereinrichtung gefaltet oder gewellt und nach Andrücken an die Oberfläche des Grundkörperprofils zumindest an einigen Anlagestellen mit dem Grundkörperprofil verbunden wird, wobei das Grundkörperprofil zusammen mit den Rippenblechen in Längsrichtung des Grundkörperprofils kontinuierlich und relativ zu einer Befestigungseinrichtung bewegt wird.

Bei dem bekannten Verfahren werden an die Maßhaltigkeit des als geschlossenes Rohr ausgebildeten Grundkörpers hohe Anforderungen gestellt, da sichergestellt werden muß, daß beim Aufbringen der gefalteten oder gewellten Rippenbleche eine spaltlose Berührung für den Befestigungsvorgang vorhanden ist. Die Steifigkeit des gefalteten oder gewellten Rippenbleches ist hierbei so hoch, daß eine Verformung des Rippenbleches zur Anpassung an einen mit größeren Toleranzen gefertigten Grundkörper nicht möglich ist. Aus diesem Grunde können beim bekannten Verfahren nur sehr präzis gefertigte und damit sehr teure rohrförmige Grundkörperprofile verwendet werden.

Der Erfindung liegt die **Aufgabe** zugrunde, das bekannte Verfahren, die zugehörige Vorrichtung und das hiermit hergestellte Rippenrohr derart weiterzuentwickeln, daß preiswert herstellbare Grundkörper zur Bildung des die Rippenbleche tragenden Rohres mit großer Breite und geringer Höhe verwendet werden können.

Die **Lösung** dieser Aufgabenstellung hinsichtlich des erfindungsgemäßen Verfahrens ist dadurch gekennzeichnet, daß das Grundkörperprofil als entlang einer Längslinie offenes Profil ausgebildet wird, auf dessen Breitseiten jeweils ein Rippenblech befestigt wird, bevor die Längsränder zusammengeführt und miteinander zu einem geschlossenen Rohr verbunden werden.

Für das erfindungsgemäße Verfahren ergibt sich der Vorteil, daß durch die Verwendung eines vor dem Verbinden mit den steifen Rippenblechen entlang einer Längslinie offenen Profiles nicht nur ein preiswert aus Bandmaterial herzustellendes Ausgangsmaterial verwendet werden kann, sondern daß sich beim Zusammenführen von Rippenblech und Grundkörper die Möglichkeit ergibt, daß sich die Breitseiten des Grundkörperprofils an die Kontur des jeweiligen Rippenbleches anpassen. Auf diese Weise kann an den vorgesehenen Verbindungsstellen problemlos für eine spaltlose Berührung der miteinander zu verbindenden Teile gesorgt werden, und zwar unabhängig davon, ob die Befestigung punktförmig oder linienförmig erfolgt. Das erfindungsgemäße Verfahren führt somit nicht nur zu einer preiswerteren Herstellung, sondern gleichzeitig zu höheren und gleichmäßigeren Fertigungsqualitäten bezüglich der auf dem Grundkörper befestigten Rippenbleche.

Gemäß einem weiteren bevorzugten Merkmal wird im Bereich der Befestigung der Rippenbleche mit dem offenen Grundkörperprofil das Grundkörperprofil von der Innenseite her unterstützt, so daß die Sicherheit für eine ordnungsgemäße Befestigung erhöht wird.

Wenn gemäß einem weiteren bevorzugten Merkmal die Stirnfläche des einen Längsrandes des Grundkörperprofils mit einer überstehenden Randfläche des anderen Längsrandes verbunden wird, ergibt sich eine besonders einfache und zuverlässige Verbindung des offenen Ausgangsprofils zu einem Rohr. Der über die Verbindungslinie der beiden Längsränder überstehende Teile des einen Längsrandes kann erfindungsgemäß anschließend abgetrennt werden.

Die erfindungsgemäße Vorrichtung weist einen im Innern des Grundkörperprofils im Bereich der Befestigungseinrichtung angeordneten Stützkern auf, der durch einen zwischen den getrennten Längsrändern des Grundkörperprofils herausragenden Flansch gehalten ist. Ein derartiger Stützkern dient als Widerlager für die für den Verbindungsvorgang aufzubringenden Anpreßkräfte, so daß eine dauerhafte Verbindung zwischen Rippenblechen und Grundkörperprofil sichergestellt werden kann. Nur die Verwendung eines ursprünglich offenen Profils ermöglicht den Einsatz eines derartigen Stützkernes. Bei einer bevorzugten Ausführungsform ist der Stützkern mit in Richtung der Relativbewegung verlaufenden Stützflächen und zwischen den Stützflächen verlaufenden Vertiefungen versehen, so daß sich die aufgrund der Relativbewegung auftretenden Reibkräfte auf das Notwendige reduzieren.

Aus den DE-OS 40 39 292 und 40 39 293 sind zwar Verfahren und Vorrichtungen zur Herstellung von berippten Wärmetauscherelementen bekannt, bei denen die rohrförmigen Grundkörper aus Halbschalen gebildet sind, die erst nach dem Befestigen der Rippenbleche miteinander verschweißt werden. Hierbei ist es Jedoch erforderlich, die Längsränder der Halbschalen über ihre Stirnflächen miteinander zu verschweißen. Wegen der unvermeidlichen Toleranzen derartiger Halbschalen und des unvermeidlichen Verzuges der Halbschalen beim Aufschweißen der Rippenbleche ist ein derartiges Verschweißen von Halbschalen bei Wärmetauscherelementen großer Länge in der Praxis nur mit hohem Aufwand durchführbar.

Die erfindungsgemäße Verwendung eines Rippenrohres zur Herstellung von Wärmetauscherelementen mit einem rohrförmigen Grundkörper, dessen Querschnitt eine große Breite im Verhältnis zu seiner Höhe aufweist und der auf seinen Breitseiten mit die Wärmeaustauschfläche vergrößernden, gefalteten oder gewellten Rippenblechen versehen ist, die zumindest an einigen Anlagestellen mit dem Grundkörper verbunden sind, erfolgt derart, daß der Grundkörper durch ein ursprünglich offenes Profil gebildet ist, dessen Längsränder miteinander zu einem geschlossenen Profil verbunden sind. Gemäß einem weiteren Merkmal der Erfindung können die Längsränder miteinander durch Schweißen, Löten oder Kleben verbunden sein.

Auf der Zeichnung ist ein Ausführungsbeispiel der erfindungsgemäßen Vorrichtung und des erfindungsgemäßen Rippenrohres dargestellt, und zwar zeigt:
- Fig. 1: eine schematische perspektivische Darstellung der für die Erfindung wichtigen Teile der Vorrichtung,
- Fig. 2: einen Querschnitt gemäß der Schnittlinie II - II in Fig. 1,
- Fig. 3: einen weiteren Schnitt gemäß der Schnittlinie III - III in Fig. 2 und
- Fig. 4: einen Querschnitt durch den Randbereich einer alternativen Ausführungsform des Grundkörpers.

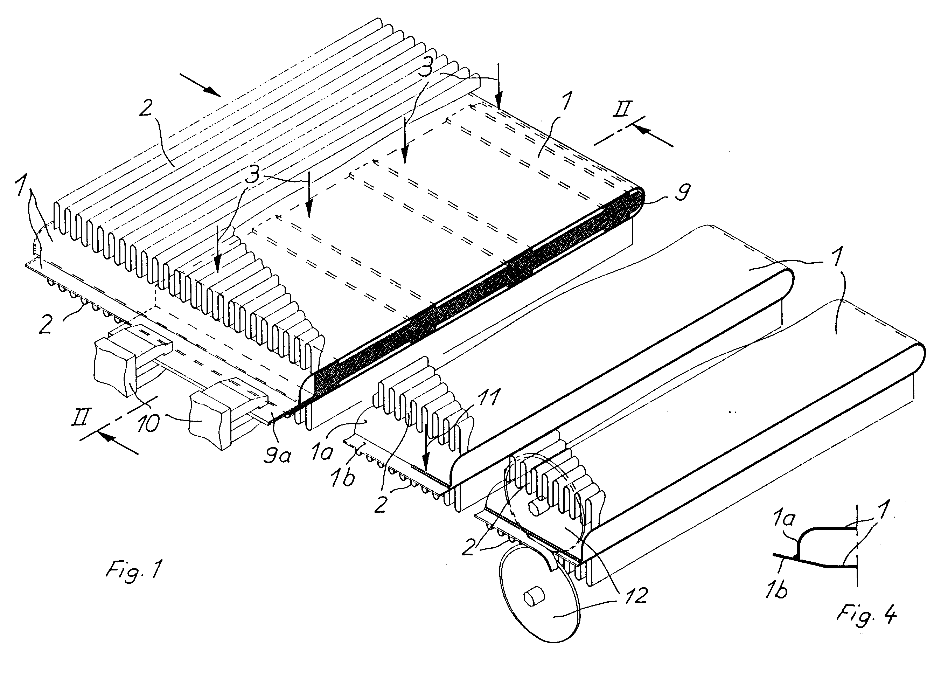

Die Fig. 1 bis 3 zeigen ein Grundkörperprofil 1, das aus einem Blechstreifen gebogen ist und entlang einer Längslinie offen ist. Dies ist am besten aus dem Querschnitt gemäß Fig. 2 zu erkennen. Der Querschnitt dieses Grundkörperprofils 1 hat eine große Breite im Verhältnis zu seiner Höhe.

Auf die gegenüberliegenden Breitseiten des Grundkörperprofils 1 wird jeweils ein Rippenblech 2 aufgebracht, das zuvor von einer Bandrolle abgezogen und entweder gefaltet oder - wie beim dargestellten Ausführungsbeispiel - gewellt worden ist. Die beiden Rippenbleche 2 werden entweder nacheinander oder wie beim Ausführungsbeispiel gleichzeitig an die Breitseiten des Grundkörperprofils 1 herangeführt und mit einer kontinuierlichen Bewegung gemeinsam einer Befestigungseinrichtung zugeführt, die in den Fig. 1 und 2 durch Pfeile 3 symbolisiert ist. Hierbei kann es sich beispielsweise um die Laserstrahlen einer Schweißeinrichtung handeln, mit denen die Rippenbleche 2 punktförmig auf der jeweiligen Seite des offenen Grundkörperprofils 1 befestigt werden. Entsprechende Schweißpunkte 4 sind in Fig. 2 eingezeichnet.

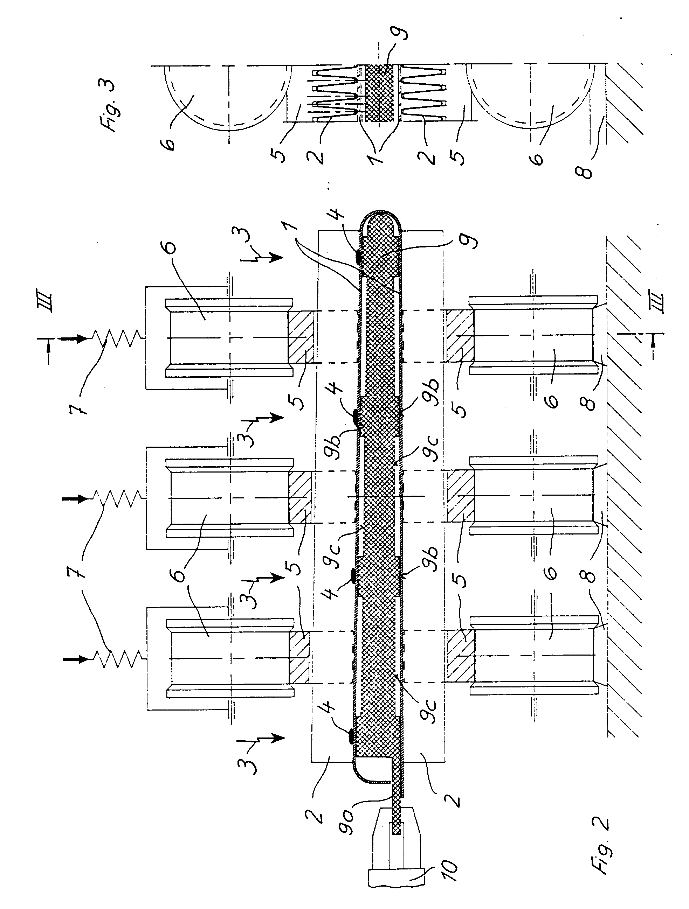

Da die Verbindung der Rippenbleche 2 mit dem Grundkörperprofil 1 eine spaltfreie Anlage der Rippenbleche 2 am Grundkörperprofil 1 voraussetzt, wird auf die Rippenbleche 2 eine Anpreßkraft ausgeübt, und zwar während der Relativbewegung zwischen dem mit den Rippenblechen 2 versehenen Grundkörperprofil 1 im Verhältnis zu der durch die Pfeile 3 symbolisierten Befestigungseinrichtung. Beim Ausführungsbeispiel gemäß den Fig. 2 und 3 sind Andrückkämme 5 zu erkennen, die gemäß Fig. 3 in die gewellten Rippenbleche 2 eingreifen und ihrerseits durch Andruckrollen 6 belastet sind, die unter der Wirkung von Druckfedern 7 stehen. Beim Ausführungsbeispiel ist die durch die Pfeile 3 symbolisierte Befestigungseinrichtung ortfest, so daß die Andrückkämme 5 sich zusammen mit dem Grundkörperprofil 1 und den Rippenblechen 2 kontinuierlich bewegen. Gemäß Fig. 2 werden lediglich die oberen Andruckrollen 6 durch die Druckfedern 7 belastet; die unteren Andruckrollen 6 laufen auf ortsfesten Schienen 8.

Durch das im Bereich der Befestigungsvorrichtung entlang einer Längslinie offene Grundkörperpofil 1 besteht die Möglichkeit, daß sich die beiden Breitseiten dieses Grundkörperprofils 1 an die Rippenbleche 2 anpassen, die aufgrund ihrer Faltung oder Wellung eine sehr hohe Steifigkeit aufweisen und deshalb nicht in der Lage sind, sich an Ungenauigkeiten des Grundkörperprofils 1 anzupassen.

Um diese Anpassung zu erleichtern und eine Gegenkraft für die durch die Andrückkämme 5 auf die Rippenbleche 2 ausgeübte Anpreßkraft zu erzeugen, ist im Inneren des offenen Grundkörperprofils 1 ein Stützkern 9 angeordnet, der mit einem Flansch 9a aus dem offenen Rand des Grundkörperprofils 1 herausragt, wie sowohl in Fig. 1 als auch in Fig. 2 zu erkennen ist. An diesem Flansch 9a wird der Stützkern 9 mittels Haltern 10 ortsfest gehalten. Das entlang einer Längslinie offene Grundkörperprofil 1 kann auf diese Weise relativ zum feststehenden Stützkern 9 bewegt werden.

Wie die Fig. 1 und 2 zeigen, ist der Stützkern 9 mit in Richtung der Relativbewegung verlaufenden Stützflächen 9b und zwischen den Stützflächen 9b verlaufenden Vertiefungen 9c ausgebildet. Die Stützflächen 9b verlaufen ausschließlich im Bereich der zwischen den Rippenblechen 2 und dem Grundkörperprofil 1 auszuführenden Verbindung, so daß bei ausreichender Abstützung die Vertiefungen 9c die Reibung zwischen dem Inneren des Grundkörperprofils 1 und der Oberfläche des Stützkerns 9 auf das notwendige Maß reduzieren.

Sobald die Rippenbleche 2 auf den Breitseiten des offenen Grundkörperprofils 1 befestigt worden sind, werden die Längsränder des Grundkörperprofils 1 zusammengeführt und miteinander zu einem geschlossenen Rohr verbunden. Diese in Fig. 1 durch einen Pfeil 11 symbolisierte Verbindung kann wiederum beispielsweise durch einen Laserstrahl erfolgen. Beim Ausführungsbeispiel wird hierbei die Stirnfläche des einen Längsrandes 1a mit einer überstehenden Randfläche 1b des anderen Langsrandes verbunden. Hierdurch haben unvermeidbare Formänderungen der Längsränder keinen negativen Einfluß auf die auszuführende Schweißnaht. Eine alternative Ausführung des Randverlaufes ist in Fig. 4 dargestellt. Bei dieser alternativen Ausführung ist die überstehende Randfläche 1b gegenüber der zugehörigen Breitseite des Grundkörperprofils 1 unter einem spitzen Winkel abgewinkelt.

Im Anschluß an die Verbindung der Längsränder des Grundkörperprofils 1 und die damit verbundene Herstellung eines geschlossenen Rohres wird der überstehende Teil der Randfläche 1b abgetrennt. Dies wird durch die in Fig. 1 eingezeichneten Trennscheiben 12 symbolisiert.

### Bezugszeichenliste:

- 1: Grundkörperprofil
- 1a: Längsrand
- 1b: Randfläche
- 2: Rippenblech
- 3: Pfeil
- 4: Schweißpunkt
- 5: Andrückkamm
- 6: Andruckrolle
- 7: Druckfeder
- 8: Schiene
- 9: Stützkern
- 9a: Flansch
- 9b: Stützfläche
- 9c: Vertiefung
- 10: Halter
- 11: Pfeil
- 12: Trennscheibe

## Patentansprüche

1. Verfahren zur Herstellung von Wärmetauscherelementen mit einem rohrförmigen Grundkörper, dessen Querschnitt eine große Breite im Verhältnis zu seiner Höhe aufweist und der auf seiner Oberfläche mit die Wärmeaustauschfläche vergrößernden Rippen versehen wird, indem auf die gegenüberliegenden Breitseiten des Grundkörperprofils (1) jeweils ein Rippenblech (2) in Profillängsrichtung aufgebracht wird, das jeweils von einer Rolle abgezogen und vor dem Aufbringen durch eine Profiliereinrichtung gefaltet oder gewellt und nach Andrücken an die Oberfläche des Grundkörperprofils (1) zumindest an einigen Anlagestellen mit dem Grundkörperprofil (1) verbunden wird, wobei das Grundkörperprofil (1) zusammen mit den Rippenblechen (2) in Längsrichtung des Grundkörperprofils (1) kontinuierlich und relativ zu einer Befestigungseinrichtung bewegt wird, und wobei,
das Grundkörperprofil (1) als entlang einer Längslinie offenes Profil ausgebildet wird, auf dessen Breitseiten jeweils ein Rippenblech (2) befestigt wird, bevor die Längsränder (1a,1b) zusammengeführt und miteinander zu einem geschlossenen Rohr verbunden werden.

2. Verfahren nach Anspruch 1, dadurch gekennzeichnet, daß im Bereich der Befestigung der Rippenbleche (2) mit dem offenen Grundkörperprofil (1) das Grundkörperprofil (1) von der Innenseite her unterstützt wird.

3. Verfahren nach Anspruch 1 oder 2, dadurch gekennzeichnet, daß die Stirnfläche des eine Längsrandes (1a) des Grundkörperprofils (1) mit einer überstehenden Randfläche (1b) des anderen Längsrandes verbunden wird.

4. Verfahren nach Anspruch 3, dadurch gekennzeichnet, daß der über die Verbindungslinie der beiden Längsränder (1a) überstehende Teil der Randfläche (1b) abgetrennt wird.

5. Vorrichtung zur Herstellung von Wärmetauscherelementen mit einem rohrförmigen Grundkörper, dessen Querschnitt eine große Breite im Verhältnis zu seiner Höhe aufweist und der auf seiner Oberfläche mit die Wärmeaustauschfläche vergrößernden Rippen versehen ist, die durch auf gegenüberliegenden Breitseiten des Grundkörperprofils (1) in Profillängsrichtung aufgebrachte Rippenbleche (2) gebildet sind, wobei diese Rippenbleche (2) jeweils von einer Rolle abgezogen und vor dem Aufbringen auf das Grundkörperprofil (1) durch eine Profiliereinrichtung gefaltet oder gewellt und nach Andrücken an die Oberfläche des Grundkörperprofils (1) zumindest an einigen Anlagestellen mit dem Grundkörperprofil (1) verbunden werden, mit einer Einrichtung zur kontinuierlichen Bewegung des Grundkörperprofils (1) zusammen mit den Rippenblechen (2) in Längsrichtung des Grundkörperprofils (1) und relativ zu einer Befestigungseinrichtung, mit
einem im Inneren des Grundkörperprofils (1) im Bereich der Befestigungseinrichtung angeordneten Stützkern (9), der durch einen zwischen den getrennten Längsrändern (1a, 1b) des Grundkörperprofils (1) herausragenden Flansch (9a) gehalten ist.

6. Vorrichtung nach Anspruch 5, dadurch gekennzeichnet, daß der Stützkern (9) mit in Richtung der Relativbewegung verlaufenden Stützflächen (9b) und zwischen den Stützflächen (9b) verlaufenden Vertiefungen (9c) versehen ist.

7. Verwendung eines Rippenrohres zur Herstellung von Wärmetauscherelementen mit einem rohrförmigen Grundkörper, dessen Querschnitt eine große Breite im Verhältnis zur seiner Höhe aufweist und der auf seinen Breitseiten mit die Wärmeaustauschfläche vergrößernden, gefalteten oder gewellten Rippenblechen (2) versehen ist, die zumindest an einigen Anlagestellen mit dem Grundkörper verbunden sind,
wobei
der Grundkörper durch ein ursprünglich offenes Profil (1) gebildet ist, dessen Längsrändern (1a,1b) miteinander zu einem geschlossenen Profil verbunden sind.

8. Rippenrohr nach Anspruch 7, dadurch gekennzeichnet, daß die Längsränder (1a,1b) miteinander durch Schweißen, Löten oder Kleben verbunden sind.

## Claims

1. Method for manufacturing heat-exchanger elements having a tubular basic body, the cross-section of which has a large width in relation to its height and which is provided on its surface with ribs enlarging the heat-exchange area, in that the opposite wide sides of the basic-body profile (1) each have attached to them in a longitudinal direction of the profile a ribbed plate (2) which, in each case, is drawn off from a roll and, before being attached, is folded or corrugated by a profiling means and, after being pressed onto the surface of the basic-body profile (1), is connected to the basic-body profile (1) at least at a few bearing points, the basic-body profile (1), together with the ribbed plates (2), being moved continuously in the longitudinal direction of the basic-body profile (1) and in relation to a fastening means, and the basic-body profile (1) being designed as a profile which is open along a longitudinal line and to each of the wide sides of which a ribbed plate (2) is fastened, before the longitudinal edges (1a, 1b) are brought together and connected to one another to form a closed tube.

2. Method according to Claim 1, characterized in that, in the region of the fastening of the ribbed plates (2) to the open basic-body profile (1), the basic-body profile (1) is supported from the inside.

3. Method according to Claim 1 or 2, characterized in that the end face of one longitudinal edge (1a) of the basic-body profile (1) is connected to a projecting edge face (1b) of the other longitudinal edge.

4. Method according to Claim 3, characterized in that that part of the edge face (1b) projecting beyond the connecting line of the two longitudinal edges (1a) is detached.

5. Device for manufacturing heat-exchanger elements with a tubular basic body, the cross-section of which has a large width in relation to its height and which is provided on its surface with ribs which enlarge the heat-exchange area and which are formed by ribbed plates (2) attached to opposite wide sides of the basic-body profile (1) in the longitudinal direction of the profile, these ribbed plates (2) in each case being drawn off from a roll and, before being attached to the basic-body profile (1), being folded or corrugated by a profiling means and, after being pressed onto the surface of the basic-body profile (1), being connected to the basic-body profile (1) at least at a few bearing points, with a means for the continuous movement of the basic-body profile (1) together with the ribbed plates (2) in the longitudinal direction of the basic-body profile (1) and in relation to a fastening means, with a supporting core (9) which is arranged inside the basic-body profile (1) in the region of the fastening means and which is held by a flange (9a) projecting between the separated longitudinal edges (1a, 1b) of the basic-body profile (1).

6. Device according to Claim 5, characterized in that the supporting core (9) is provided with supporting faces (9b) extending in the direction of the relative movement and with recesses (9c) extending between the supporting faces (9b).

7. Use of a ribbed tube for manufacturing heat-exchanger elements with a tubular basic body, the cross-section of which has a large width in relation to its height and which is provided on its wide sides with folded or corrugated ribbed plates (2) which enlarge the heat-exchange area and which are connected to the basic body at least at a few bearing points, the basic body being formed by an originally open profile (1), the longitudinal edges (1a, 1b) of which are connected to one another to form a closed profile.

8. Ribbed tube according to Claim 7, characterized in that the longitudinal edges (1a, 1b) are connected to one another by welding, soldering or adhesive bonding.

## Revendications

1. Procédé pour fabriquer des éléments échangeurs de chaleur, comprenant un corps de base tubulaire dont la section transversale présente une grande largeur par rapport à sa hauteur et qui est muni d'ailettes agrandissant la surface d'échange de chaleur, une tôle nervurée (2) étant appliquée dans le sens longitudinal du profil sur chacun des côtés larges opposés du profil formant corps de base (1), ladite tôle nervurée étant dévidée d'une bobine, étant plissée ou ondulée avant d'être posée et étant reliée au profil formant corps de base (1) au moins en quelques points de contact après avoir été appliquée contre la surface du profil formant corps de base (1), le profil formant corps de base (1) étant déplacé conjointement avec les tôles nervurées (2) dans son sens longitudinal de manière continue et par rapport à un système de fixation, et le profil formant corps de base (1) étant conçu sous la forme d'un profil qui est ouvert le long d'un axe longitudinal, et sur chacun des côtés larges duquel une tôle nervurée (2) est fixée avant que les bords longitudinaux (1a, 1b) ne soient réunis et solidarisés pour obtenir un tube fermé.

2. Procédé selon la revendication 1, caractérisé en ce que le profil formant corps de base (1) est soutenu de l'intérieur dans la zone de fixation des tôles nervurées (2) au profil ouvert formant corps de base (1).

3. Procédé selon la revendication 1 ou 2, caractérisé en ce que la face frontale de l'un des bords longitudinaux, (1a), du profil formant corps de base (1) est reliée à la surface de bord en saillie (1b) de l'autre bord longitudinal.

4. Procédé selon la revendication 3, caractérisé en ce que la partie de la surface de bord (1b) qui dépasse de la ligne de liaison des deux bords longitudinaux (1a) est découpée.

5. Dispositif pour fabriquer des éléments échangeurs de chaleur, comprenant un corps de base tubulaire dont la section transversale présente une grande largeur par rapport à sa hauteur et qui est muni d'ailettes qui agrandissent la surface d'échange de chaleur et qui sont formées par des tôles nervurées (2) montées sur des côtés larges opposés du profil formant corps de base (1) dans le sens longitudinal de celui-ci, chacune de ces tôles nervurées (2) étant dévidée d'une bobine et plissée ou ondulée par un système de profilage avant d'être posée sur le profil formant corps de base (1) et étant reliée au moins en quelques points de contact au profil formant corps de base (1) après avoir été appliquée contre la surface de celuici, ledit dispositif comprenant un système pour déplacer en continu le profil formant corps de base (1) conjointement avec les tôles nervurées (2) dans le sens longitudinal du profil formant corps de base (1) et par rapport à un système de fixation, comprenant un noyau porteur (9) qui est disposé à l'intérieur du profil formant corps de base (1) dans la zone du système de fixation et qui est maintenu par une semelle (9a) qui dépasse entre les bords longitudinaux séparés (1a, 1b) du profil formant corps de base (1).

6. Dispositif selon la revendication 5, caractérisé en ce que le noyau porteur (9) est pourvu de surfaces d'appui (9b) s'étendant dans le sens du déplacement relatif et de parties en creux (9c) s'étendant entre ces surfaces d'appui (9b).

7. Mise en oeuvre d'un tube à ailettes pour fabriquer des éléments échangeurs de chaleur, comprenant un corps de base tubulaire dont la section transversale pré-présente une grande largeur par rapport à sa hauteur et qui est muni, sur ses côtés larges, de tôles nervurées plissées ou ondulées (2) qui agrandissent la surface d'échange de chaleur et qui sont reliées au corps de base au moins en quelques points de contact, le corps de base étant formé par un profil (1) ouvert au départ, dont les bords longitudinaux (1a, 1b) sont reliés entre eux pour former un profil fermé.

8. Tube à ailettes selon la revendication 7, caractérisé en ce que les bords longitudinaux (1a, 1b) sont reliés entre eux par soudage, brasage ou collage.
